# EUROPÄISCHE PATENTANMELDUNG

(11) **EP 1 024 054 A2**
(43) Veröffentlichungstag der Anmeldung: **02.08.2000**
(21) Anmeldenummer: 99125351.9
(22) Anmeldetag: 20.12.1999
(51) Int. Cl.: B60R 13/02

(54) **Fahrzeug-Formhimmel**

(30) Priorität: 26.01.1999 DE 19902905
(71) Anmelder: Johnson Controls Headliner GmbH, 42285 Wuppertal (DE)
(72) Erfinder: Müller, Wolfgang, 66701 Beckingen-Reimsbach (DE)
(74) Vertreter: Patentanwälte Thömen & Körner

(57) **Zusammenfassung**

Die Erfindung betrifft einen Fahrzeug-Formhimmel, der aus einer zum Fahrzeugrahmen (2) weisenden flachen Kunststoffschicht (4), einer abstandshaltenden Schicht (6) und einer zum Fahrzeuginnenraum weisenden Dekorschicht (8) besteht.

Bei der abstandshaltenden Schicht handelt es sich um eine dreidimensional verformte Kunststoffschicht (10) mit einseitigen Einstülpungen (12), deren Öffnungen zur Dekorschicht (8) weisen. Die Dekorschicht (8) stellt eine luftdurchlässige und/oder schwingungsfähige Kunststoffschicht dar.

## Beschreibung

Die Erfindung betrifft ein Fahrzeug-Formhimmel nach dem Oberbegriff des Anspruchs 1.

Bekannt sind Fahrzeug-Formhimmel, die aus wenigstens drei Kunststoffschichten einen sogenannten Sandwichaufbau bilden. Dieser Sandwichaufbau besteht aus zwei Deckschichten, zwischen denen sich eine abstandshaltende Schicht befindet. Letztere ist in der Regel Polyurethanschaum oder Vliesstoff.

Die offenporige Struktur der zum Fahrgastraum weisenden Materialien und der abstandshaltenden Schicht bewirkt eine Minderung der Schallintensität im Fahrzeuginnenraum.

Nachteile bestehen allerdings darin, daß Polyurethanschaum schlecht recycelbar ist und geringe druck- und bruchfeste Eigenschaften aufweist. Vliesstoffe besitzen ebenfalls nur geringe Druckfestigkeit und sind daher insbesondere als selbsttragende Konstruktion für Fahrzeug-Formhimmel nicht geeignet. Außerdem sind sie im Vergleich mit anderen Materialien relativ teuer.

Bekannt sind luftgefüllte Hohlkörperplatten, die aus drei Kunststoffschichten bestehen und als Verkleidung, Auskleidung oder Abdeckung in Automobilen eingesetzt werden können. Die Hohlkörperplatte besteht aus einer dreidimensionalen Mittelschicht, die auf beiden Seiten mit je einer glatten Kunststoffschicht kaschiert wird. Bei der Verformung der Mittelschicht werden zylindrische, einseitig geschlossene Ausstülpungen erzeugt, die beim Kaschieren mit den beiden anderen Schichten luftdicht abgeschlossen werden. So entsteht ein dreidimensionales Produkt mit regelmäßig angeordneten, säulenförmigen und versiegelten Luftkammern.

Die luftgefüllte Hohlkörperplatte zeichnet sich für die Verwendung als Fahrzeug-Formhimmel durch eine gute Druck- und Bruchfestigkeit aus.

Ein großer Nachteil besteht allerdings darin, daß die luftgefüllte Hohlkörperplatte schallharte Außenwände besitzt, die zu einer überwiegenden Reflexion der Schallwellen führen, und daher nur schlechte akustische Absorptonseigenschaften aufweist. Nachteilig wirkt sich außerdem der relativ schwergewichtige Aufbau der Hohlkörperplatte aus.

Weiterhin sind dreidimensionale gewebeartige Strukturen bekannt, die beispielsweise durch ein im EP 0 512 431 B1 beschriebenes Verfahren hergestellt werden können. Im Fahrzeugbau kann der dreidimensionale gewebeartige Werkstoff als Abstandshalter von Sandwichelementen eingesetzt werden.

Vorteilhaft für den Einsatz als abstandshaltende Schicht wirkt sich das geringe Raumgewicht des netzartigen Werkstoffes aus.

Nachteilig ist allerdings die relativ geringe Druckfestigkeit des gewebeartigen Werkstoffes. Eine Anwendung als abstandshaltende Schicht erfolgt durch Auflagern einer schallharten zum Fahrzeuginnenraum weisenden Kunststoffschicht oder durch Füllen mit Kunststoffschaum.

Der Erfindung liegt die Aufgabe zugrunde, einen Fahrzeug-Formhimmel zu schaffen, der sehr gute akustische Absortionseigenschaften besitzt und gleichzeitig bruch- und druckfest, leicht sowie recycelbar ist.

Diese Aufgabe wird mit den Merkmalen des Anspruchs 1 gelöst. Weiterbildungen und vorteilhafte Ausgestaltungen ergeben sich aus den Unteransprüchen.

Der erfindungsgemäße Fahrzeug-Formhimmel ist als Sandwich aufgebaut und besitzt als abstandshaltende Schicht eine dreidimensional verformte Kunststoffschicht mit einseitigen Einstülpungen, deren Öffnungen zur Dekorschicht weisen, wobei die Dekorschicht luftdurchlässig und/oder schwingungsfähig sein kann. Als Deckschicht kommt rückseitig eine glatte Kunststoffschicht zum Einsatz, zum Fahrgastraum wird die Deckschicht durch die abstandshaltende Schicht mit gebildet.

Durch diese Anordnung wird erreicht, daß der Fahrzeug-Formhimmel sehr gute akustische Absorptionseigenschaften aufweist.

Bei einer offenporigen, luftdurchlässigen Struktur der Dekorschicht absorbiert bzw. dämpft diese den Schall durch Reibung der Luftmoleküle an den Porenwänden. Bei schwingungsfähiger Ausgestaltung bildet die Dekorschicht gemeinsam mit den luftgefüllten Hohlräumen der Einstülpungen in der dreidimensional verformte Kunststoffschicht ein Feder-Masse-System. Wird dieses zu Schwingungen angeregt, kommt es aufgrund von Resonanzen und innerer Dämpfung zu einer Absorption. Bei kombinierter offenporiger, luftdurchlässiger Struktur und schwingungsfähiger Ausgestaltung der Dekorschicht werden beide Effekte wirksam.

Die dreidimensional verformte Kunststoffschicht hat als abstandshaltende Schicht aufgrund ihrer einseitigen Einstülpungen außerdem den Vorteil, daß der Fahrzeug-Formhimmel einen leichten, druckfesten und selbsttragenden Aufbau erhält.

Eine Weiterbildung sieht vor, daß ein luftdurchlässiger Kunststoff aus Schaummaterial oder Vliesstoff zwischen der dreidimensional verformten Kunststoffschicht und der Dekorschicht eingebracht ist.

Dadurch wird erreicht, daß sich die akustische Absorptionseigenschaft des Fahrzeug-Formhimmels infolge einer zusätzlichen Reibung der Luftmoleküle an den Porenwänden dieser Schicht erhöht.

Ferner führt die Verwendung dieser Schicht zu einer Polsterung des Fahrzeuginnenraumes und zu einer Abdeckung der ästhetisch unansehnlichen und sich auf dem Dekor abzeichnenden Öffnungen der Einstülpungen.

Weiterhin ist vorgesehen, eine sehr dünne schwingungsfähige Kunststoffolie auf die zum Dekor weisende Seite der dreidimensional verformten Kunststoffschicht aufzubringen.

Die schwingungsfähige Kunststoffolie überdeckt die Öffnungen der Einstülpungen in der Weise, daß luftgefüllte Hohlräume entstehen, deren Luftmoleküle zu Schwingungen angeregt werden. Auch in diesem Fall wird ein Feder-Masse-System gebildet, das zu Schwingungen angeregt werden kann. Aufgrund von Resonanzen und innerer Dämpfung kommt es ebenfalls zu einer Absorption. Diese akustische Absorption entsteht zusätzlich zu der durch Reibung der Luftmoleküle an den Porenwänden der Dekorschicht und/oder Kunststoffschaumschicht hervorgerufenen Minderung der Schallintensität.

Ein Vorteil besteht auch in der Abdeckung der ästhetisch unansehnlichen und sich auf dem Dekor abzeichnenden Öffnungen der Einstülpungen.

Eine Weiterbildung sieht vor, daß als Ausgangsmaterial für die glatte und die dreidimensional verformte Kunststoffschicht Folien mit Dicken kleiner als 1 mm verwendet werden.

Dadurch wird erreicht, daß der Fahrzeug-Formhimmel einen äußerst leichten und trotzdem druckfesten und selbstragenden Aufbau erhält.

Außerdem ist vorgesehen, daß die flache und die dreidimensional verformte Kunststoffschicht aus werkstofflich ähnlichem Material bestehen, vorzugsweise aus Polyolefinen wie Polypropylen und Polyethylen.

Dadurch wird erreicht, daß die beiden Schichten einen Verbund darstellen, der sich durch sehr guten Zusammenhalt und Recycelbarkeit auszeichnet. Die ähnlichen Wärmeausdehnungskoeffizienten der verwendeten Materialien verhindern ein Ausbeulen des Fahrzeug-Formhimmels.

Die Einstülpungen in der dreidimensional verformbaren Kunststoffschicht weisen einen Durchmesserbereich von 4 bis 12 mm und einen Tiefenbereich von 4 bis 10 mm auf.

Diese Bemessung stellt eine Optimierung der Anforderungen nach möglichst hoher akustischer Dämpfung auch im mittelfrequenten Bereich ab 500 Hz, geringem Materialeinsatz und ausreichender Steiffigkeit sowie geringer Absenkung der lichten Höhe im Fahrgastraum dar.

Die Dekorschicht weist vorzugsweise einen Dickenbereich zwischen 0,5 und 2 mm auf.

Diese Dicke ist so bemessen, daß sich die Wabenstruktur der Einstülpungen nicht in unerwünschter Weise optisch darstellt.

Die luftdurchlässige Schaum- bzw. Vliesstoffschicht kann bevorzugt einen Dickenbereich zwischen 1 bis 5 mm aufweisen.

Dieser Dickenbereich ist so bemessen, daß den schwingenden Luftmolekülen beim Durchströmen der Schaum- bzw. Vliesstoffschicht ein ausreichender Widerstand entgegengesetzt wird, um eine spürbare akustische Dämpfung zu erzielen.

Vorzugsweise weist die sehr dünne schwingungsfähige Kunststoffolie einen Dickenbereich zwischen 10 bis 500 µm auf.

Als Bestandteil eines Feder-Masse-Systems ermöglicht diese Bemessung des Dickenbereichs der dünnen, schwingungsfähigen Kunststoffolie eine wirksame akustische Dämpfung, ohne daß hier luftdurchlässige Eigenschaften vorhanden sein müssen.

Schließlich kann der von den Einstülpungen freie Bereich der dreidimensional verformten Kunststoffschicht zwischen der flachen Kunststoffschicht einerseits und der Dekorschicht bzw. dem Schaummaterial oder Vliesstoff bzw. der sehr dünnen schwingungsfähigen Kunststoffolie andererseits als Kabelkanal und/oder Luftkanal zur Fahrzeugbelüftung dienen. Dadurch wird der verbleibende Bereich ohne Beeinträchtigung der Festigkeit des Materials und der akustischen Eigenschaften so genutzt, daß für die Unterbringung des Kabelkanals und/oder des Luftkanals kein zusätzlicher Raum benötigt wird und die lichte Höhe im Fahrgastraum nicht weiter reduziert wird.

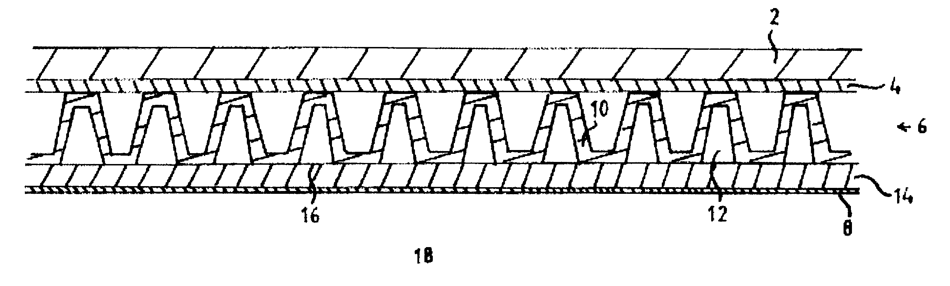

Nachfolgend wird die Erfindung anhand eines Ausführungsbeispiels erläutert, das in der Zeichnung dargestellt ist.

Die Zeichnung zeigt einen Querschnitt durch den erfindungsgemäßen Fahrzeug-Formhimmel.

Der in der Zeichnung dargestellte erfindungsgemäße Fahrzeug-Formhimmel umfaßt wenigstens eine zum Fahrzeugrahmen 2 weisende flache Kunststoffschicht 4, eine als abstandshaltende Schicht 6 eingebrachte dreidimensional verformte Kunststoffschicht 10 mit einseitigen Einstülpungen 12 und eine luftdurchlässige und/oder schwingungsfähige Dekorschicht 8.

Optional ist ein luftdurchlässiger Kunststoff 14 und/oder eine sehr dünne schwingungsfähige Kunststoffolie 16 zwischen die dreidimensional verformte Kunststoffschicht 10 und die Dekorschicht 8 eingebracht.

Der im Fahrzeuginnenraum 18 auftretende Schall wird bei dem erfindungsgemäßen Fahrzeug-Formhimmel durch die luftdurchlässige, offenporige Dekorschicht 8 und die zum Fahrzeuginnenraum 18 offenen Einstülpungen 12 der dreidimensional verformten Kunststoffschicht 10 signifikant absorbiert. Die Reibung der Luftmoleküle an den Porenwänden der luftdurchlässigen, offenporigen Dekorschicht 8 führt dabei zu einer Minderung der im Fahrzeuginnenraum 18 auftretenden Schallintensität.

Bei schwingungsfähiger Ausgestaltung bildet die Dekorschicht 8 gemeinsam mit den luftgefüllten Hohlräumen der Einstülpungen 12 in der dreidimensional verformte Kunststoffschicht 10 ein Feder-Masse-System. Wird dieses zu Schwingungen angeregt, kommt es aufgrund von Resonanzen und innerer Dämpfung zu einer Absorption.

Der Effekt der akustischen Absorption durch Reibung der Luftmoleküle innerhalb der luftdurchlässigen Dekorschicht 8 kann durch Einbringen einer luftdurchlässigen Kunststoffschicht aus Schaummaterial 14 zwischen dreidimensional verformter Kunststoffschicht 10 und Dekorschicht 8 erhöht werden.

Eine ebenfalls gute Absorptionseigenschaft erhält man durch das Aufbringen einer sehr dünnen schwingungsfähigen Kunststoffolie 16 auf die zum Dekor weisende Seite der dreidimensional verformten Kunststoffschicht 10.

Dadurch werden die einseitigen Einstülpungen 12 der dreidimensional verformten Kunststoffschicht 10 abgedeckt. Die Luftmoleküle werden in den luftgefüllten Hohlkörpern zu Schwingungen angeregt, die dann durch Resonanzeffekte und innere Dämpfung in den Einstülpungen abgedämpft werden.

Eine vorteilhafte Ausführungsform der Erfindung weist folgende Abmessungen auf. Die dreidimensional verformbare Schicht 10 umfaßt Einstülpungen 12 mit einem Durchmesserbereich zwischen 4 und 12 mm und einen Tiefenbereich zwischen 4 und 10 mm. Die Dicke der Dekorschicht 8 beträgt 0,5 bis 2 mm, die Dicke der luftdurchlässigen Schaum- 14 bzw. Vliesstoffschicht beträgt 1 bis 5 mm und die Dicke der schwingungsfähigen Kunststoffolie 16 beträgt 10 bis 500 µm.

## Patentansprüche

1. Fahrzeug-Formhimmel, bestehend aus wenigstens einer zum Fahrzeugrahmen (2) weisenden flachen Kunststoffschicht (4), einer abstandshaltenden Schicht (6) und einer zum Fahrzeuginnenraum weisenden Dekorschicht (8), **dadurch gekennzeichnet,** daß die abstandshaltende Schicht (6) aus einer dreidimensional verformten Kunststoffschicht (10) mit einseitigen Einstülpungen (12) besteht, deren Öffnungen zur Dekorschicht (8) weisen, und die Dekorschicht (8) luftdurchlässig und/oder schwingungsfähig ist und zusammen mit den Einstülpungen (12) der abstandshaltenden Schicht (6) eine schallabsorbierende Schicht bildet.

2. Fahrzeug-Formhimmel nach Anspruch 1, **dadurch gekennzeichnet,** daß ein luftdurchlässiger Kunststoff aus Schaummaterial (14) oder Vliesstoff zwischen der dreidimensional verformten Kunststoffschicht (10) und der Dekorschicht (8) eingebracht ist.

3. Fahrzeug-Formhimmel nach einem der Ansprüche 1 bis 2, **dadurch gekennzeichnet,** daß eine sehr dünne schwingungsfähige Kunststoffolie (16) auf die zur Dekorschicht (8) weisende Seite der dreidimensional verformten Kunststoffschicht (10) aufgebracht ist.

4. Fahrzeug-Formhimmel nach einem der Ansprüche 1 bis 3, **dadurch gekennzeichnet,** daß als Ausgangsmaterial für die flache (4) und die dreidimensional verformte Kunststoffschicht (10) Folien mit Dicken kleiner als 1 mm verwendet werden.

5. Fahrzeug-Formhimmel nach einem der Ansprüche 1 bis 4, **dadurch gekennzeichnet**, daß die flache (4) und die dreidimensional verformte Kunststoffschicht (10) aus werkstofflich ähnlichem Material bestehen, vorzugsweise aus Polyolefine wie Polypropylen und Polyethylen.

6. Fahrzeug-Formhimmel nach einem der Ansprüche 1 bis 5, **dadurch gekennzeichnet,** daß die Einstülpungen (12) in der dreidimensional verformbaren Kunststoffschicht (10) einen Durchmesserbereich von 4 bis 12 mm und einen Tiefenbereich von 4 bis 10 mm aufweisen.

7. Fahrzeug-Formhimmel nach einem der Ansprüche 1 bis 6, **dadurch gekennzeichnet**, daß die Dekorschicht (8) einen Dikkenbereich zwischen 0,5 und 2 mm aufweist.

8. Fahrzeug-Formhimmel nach einem der Ansprüche zwei bis sieben, **dadurch gekennzeichnet**, daß die luftdurchlässige Schaum- (14) bzw. Vliesstoffschicht einen Dickenbereich zwischen 1 bis 5 mm aufweist.

9. Fahrzeug-Formhimmel nach einem der Ansprüche 3 bis 8, **dadurch gekennzeichnet**, daß die sehr dünne schwingungsfähige Kunststoffolie (16) einen Dickenbereich zwischen 10 bis 500 µm aufweist.

10. Fahrzeug-Formhimmel nach einem der Ansprüche 1 bis 8, **dadurch gekennzeichnet,** daß der von den Einstülpungen (12) freie Bereich der dreidimensional verformten Kunststoffschicht zwischen der flachen Kunststoffschicht (4) einerseits und der Dekorschicht (8) bzw. dem Schaummaterial (14) oder Vliesstoff bzw. der sehr dünnen schwingungsfähigen Kunststoffolie (16) andererseits als Kabelkanal und/oder Luftkanal zur Fahrzeugbelüftung dient.
